# EUROPÄISCHE PATENTANMELDUNG

(11) **EP 0 786 560 A2**
(43) Veröffentlichungstag der Anmeldung: **30.07.1997**
(21) Anmeldenummer: 96119579.9
(22) Anmeldetag: 06.12.1996
(51) Int. Cl.: E03B 3/02, B01D 35/28

(54) **Vorrichtung zum Sammeln von Regenwasser**

(30) Priorität: 27.01.1996 DE 29601370 U; 22.04.1996 DE 29607157 U; 27.04.1996 DE 29607704 U; 29.06.1996 DE 29611383 U
(71) Anmelder: Schwarzkopf Wassertechnik, 94508 Schöllnach (DE)
(72) Erfinder: Schwarzkopf, Josef, 94508 Schöllnach (DE)
(74) Vertreter: Graf, Helmut, Dipl.-Ing.

(57) **Zusammenfassung**

Eine Vorrichtung zum Sammeln von Regenwasser besitzt ein für den Einbau im Untergrund bestimmtes Gehäuse (1), dessen Innenraum durch einen zumindest teilweise als Sieb (11) ausgebildeten Zwischenboden (6) in eine obere Kammer über den Zwischenboden und in eine untei Kammer unter den Zwischenboden unterteilt ist, wenigstens einen an einer Umfangswand (1') des Gehäuses in die obere Kammer mündenden Regenwasserzulauf (12) einen an der Umfangswand (1') des Gehäuses vorgesehenen Wasser- und Schmutzaustrag (14) sowie einen Ablauf (5) an der unteren Kammer zum Abführen des gesammelten Regenwassers.

## Beschreibung

Die Erfindung bezieht sich auf eine Vorrichtung gemäß Oberbegriff Patentanspruch 1 oder 14.

Aufgabe der Erfindung ist es, eine Vorrichtung aufzuzeigen, die bei einfacher Konstruktion und einfacher Wartung ein verbessertes Sammeln von Regenwasser für eine weitere Verwertung ermöglicht. Zur Lösung dieser Aufgabe ist eine Vorrichtung entsprechend den kennzeichnenden Teil des Patentanspruches 1 oder 14 ausgebildet.

Eine Besonderheit der erfindungsgemäßen Vorrichtung besteht darin, daß ein Geruchs-Verschluß vorgesehen, und zwar zwischen der unteren Kammer bzw. deren Ablauf und dem Anschluß bzw. Auslauf, über den das gesammelte Regenwasser beispielsweise eine Sammelbehälter oder einer Zisterne zugeführt wird.

Durch den Geruchs-Verschluß ist eine Belastung des gesammelten Regenwassers durch Abgase oder Dämpfe aus einem Abwasserkanal wirksam verhindert. Der Geruchs-Verschluß läßt sich weiterhin in vorteilhafter Weise so ausgestalten, daß der Auslauf horizontal von der Vorrichtung wegführt, womit eine besonders kleine Einbautiefe erreicht wird. Weiterhin kann der Geruchsverschluß so ausgeführt werden, daß ein Schwenken des Auslaufs um eine vertikale Achse möglich ist, so daß dieser Auslauf den jeweiligen Einbauverhältnissen entsprechend optimal orientiert werden kann.

In ihrer einfachsten und preiswertesten Ausgestaltung besitzt die erfindungsgemäße Vorrichtung ein Gehäuse, welches von einem Kreis- bzw. Hohlzylinder gebildet ist, der die Umfangswand des Gehäuses bildet und an einem Ende bzw. an der Gehäuseunterseite durch einen Boden und am anderen Ende bzw. an der Gehäuseoberseite durch einen abnehmbaren Deckel verschlossen ist. Im Inneren des Gehäuses ist dann ein als Sieb ausgebildeter Zwischenboden geneigt angeordnet, der den Innenraum des Gehäuses in eine obere und eine untere Kammer unterteilt. In die obere Kammer mündet der Regenwasserzulauf. Weiterhin ist dort der Austrag vorgesehen. An der unteren Kammer ist ein Ablauf zum Entnehmen des durch das Sieb von Fest- bzw. Fremdstoffen gereinigten Regenwassers vorgesehen.

Der Zwischenboden ist herausnehmbar. Bei einer bevorzugten Ausführungsform ist das Sieb des Zwischenbodens leicht gewellt, wobei die Wellentäler und Wellenkämme sich quer bzw. senkrecht zu einer Achsrichtung erstrecken, die die Fließrichtung des Wassers über den Zwischenboden darstellt und den Zulauf und den Austrag verbindet. Durch entsprechende Wahl des Neigungswinkels, den der Zwischenboden gegenüber der Horizontalen aufweist, und der Höhe der Wellung ist es möglich, auch bei geringen Niederschlagsmengen einen zuverlässigen Schmutzaustrag bei einer möglichst großen Menge an gesammeltem Regenwasser sicherzustellen.

Bei der kreiszylinderförmigen Ausbildung der Umfangswand des Gehäuses ergibt sich für den geneigten, herausnehmbaren Zwischenboden eine ovale Umfangslinie. Hierdurch ist auch gewährleistet, daß der Zwischenboden jeweils nur in der gewünschten Richtung, nämlich mit den Wellentälern und Wellenkämmen der Wellung des Siebes senkrecht zur Achsrichtung, zwischen Zulauf und Austrag liegend passend im Gehäuse angeordnet werden kann.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in vereinfachter Darstellung und im Längsschnitt eine Einrichtung zum Filtern und Sammeln von Regenwasser gemäß der Erfindung;
- Fig. 2: in vereinfachter Darstellung und in Draufsicht einen als Sieb ausgebildeten Zwischenboden der Vorrichtung gemäß Figur 1;
- Fig. 3: in vergrößerter Detaildarstellung einen Teilschnitt durch den siebartigen Zwischenboden;
- Fig. 4: in Seitendarstellung und teilweise im Schnitt eine weitere Ausführungsform der erfindungsgemäßen Einrichtung;
- Fig. 5: im Querschnitt eine weitere Ausführungsform der erfindungsgemäßen Einrichtung;
- Fig. 6: einen Querschnitt ähnlich Figur 5, jedoch bei einer weiteren möglichen Ausführungsform;
- Fig. 7: in vergrößerter Darstellung und im Schnitt das untere Ende einer Einrichtung zum Filtern und Sammeln von Regenwasser zusammen mit dem dort vorgesehenen Geruchs-Verschluß.

Die in den Figuren dargestellte Vorrichtung dient als Regenwassersammler und ist für eine Anordnung im Boden ausgebildet. Im einzelnen besteht der Sammler aus dem bei der dargestellten Ausführungsform kreiszylinderförmigen Gehäuse 1 mit einer horizontalen Gehäuseachse A. An der Oberseite ist das Gehäuse 1 durch einen abnehmbaren Deckel 2 verschlossen. An der Unterseite besitzt das Gehäuse einen Boden 3 mit einer zentralen Öffnung 4 mit Anschlußflansch 5, an welchen ein nicht dargestelltes, an einen Regenwassersammelbehälter führendes Rohr anschließbar ist.

Im Inneren des Gehäuses 1 ist ein Zwischenboden 6 vorgesehen, der in Richtung der Achse A von dem Boden 3 beabstandet ist und dessen Ebene mit einer die Achse A senkrecht schneidenden, horizontale Bezugsebene 7 einen flachen Winkel α, d.h. einen Winkel wesentlich kleiner als 30° einschließt. Bei der dargestellten Ausführungsform beträgt der Winkel α etwa 10°.

Der Zwischenboden 6 ist herausnehmbar und liegt mit einem Zwischenbodenrand oder -rahmen 8 auf einem an der Innenfläche der zylinderförmigen Gehäuseumfangswand 1' vorgesehenen Flansch 9 auf. Der Flansch oder Halter 9 ist so angeordnet und der Rahmen 8 ist so geformt, daß letzterer entsprechend dem Neigungswinkel α schräg im Gehäuse 1 angeordnet ist und durch den Halter 9 auch der Spalt zwischen dem Umfang des Rahmens 8 und der Innenfläche der Umfangswand 1' verschlossen ist. Entsprechend der Schrägstellung besitzt der Halter 8 an der Außenfläche eine ovale Formgebung, wobei die längere Achse L dieser Formgebung mit der Bezugsebene 7 den Winkel α einschließt.

Im Bereich der Rahmenöffnung besitzt der Rahmen 8 angeformte Stege 10, die mit ihrer Längserstreckung in der Ebene des Rahmens 8, aber senkrecht zur Achse L liegen. Auf dem Rahmen 8 und den Stegen 10 ist ein die Öffnung des Rahmens 8 verschließendes Sieb 11 angeordnet und in geeigneter Form derart befestigt, daß dieses Sieb 11 eine wellenartige Struktur bildet, und zwar mit sich senkrecht zur Achse L erstreckenden Wellenkämmen und Wellentälern dadurch, daß sich das Sieb auf den Stegen 10 aufliegend abstützt und in den Zwischenräumen zwischen zwei benachbarten Stegen 10 jeweils leicht nach unten durchhängt.

Auf dem Niveau des Zwischenbodens 6 sind einander bezogen auf die Achse A um 180° gegenüberliegend ein Einlaufflansch 12 mit einer Öffnung 13 und ein Auslaufflansch 14 (Austrag) mit einer Öffnung 15 vorgesehen, und zwar derart, daß der untere Bereich des Einlaufflansches 12 und des Auslaufflansches 14 jeweils niveaugleich mit dem Zwischenboden 6 liegen. Die Achsen des Einlaufflansches 12 und des Auslaufflansches 14 sind in einer gemeinsamen Ebene mit den Achsen L und A angeordnet ist, und zwar parallel zu der Ebene des Zwischenbodens 6. Die Achsen der Flansche 12 und 14 schließen mit der Bezugsebene 7 ebenfalls den Winkel α ein.

Der Einlaufflansch 12 ist an ein Rohr 16 angeschlossen, welches zum Zuführen von Regenwasser dient und beispielsweise Bestandteil des Ablaufes einer Dachrinne ist. Der Auslaufflansch 14 ist an ein Rohr 17 angeschlossen, welches z.B. an einen Kanal führt.

Das Regenwasser fließt über das Rohr 16 und die Öffnung 13 in den Innenraum des Gehäuses 1 und gelangt dann über das Sieb 11 in den Raum unterhalb des Zwischenbodens 6 und von dort über die Öffnung 4 in einen nicht dargestellten Sammelbehälter. Dadurch, daß das Sieb 11 leicht gewellt ist, wird eine gewisse turbulente Strömung im Regenwasserstrom auf den Sieb 11 erreicht, so daß trotz feinmaschiger Ausbildung des Siebes 11 eine ausreichend große Menge an Regenwasser durch den Zwischenboden 6 hindurchtritt.

Da sich die Öffnungen 13 und 14 achsgleich gegenüberliegen und im wesentlichen in der oben beschriebenen Weise niveaugleich mit der Ebene des Zwischenbodens 6 angeordnet sind, erfährt dasjenige Regenwasser, welches nicht durch das Sieb 11 in den Raum unter den Zwischenboden 6 gelangt beim Durchströmen des Gehäuses 1 im wesentlichen keine Richtungsänderung. Hierdurch wird erreicht, daß auch bei geringer Niederschlagsmenge noch genügend Wasser über das Sieb 11 von dem Einlaßflansch 12 an den Auslaßflansch 14 strömt, um das Sieb 11 von Schmutz oder anderen Ablagerungen zu reinigen und diese in das Rohr 17 zu fördern.

Die erfindungsgemäße Vorrichtung vermeidet gehäusefeste Leitflächen zum Umlenken oder Ablenken des Wasserstromes zwischen den Öffnungen 13 und 15, um auch bei geringen Wassermengen einen ausreichenden Reinigungseffekt zu erzielen.

Das Gehäuse 1 mit allen an diesem Gehäuse vorgesehenen Elementen, einschließlich Gehäuseboden 3 und Flansche 5, 12 und 14 sowie Halter 9, der Rahmen 8 des Zwischenbodens einschließlich der Stege 10 bestehen aus Kunststoff.

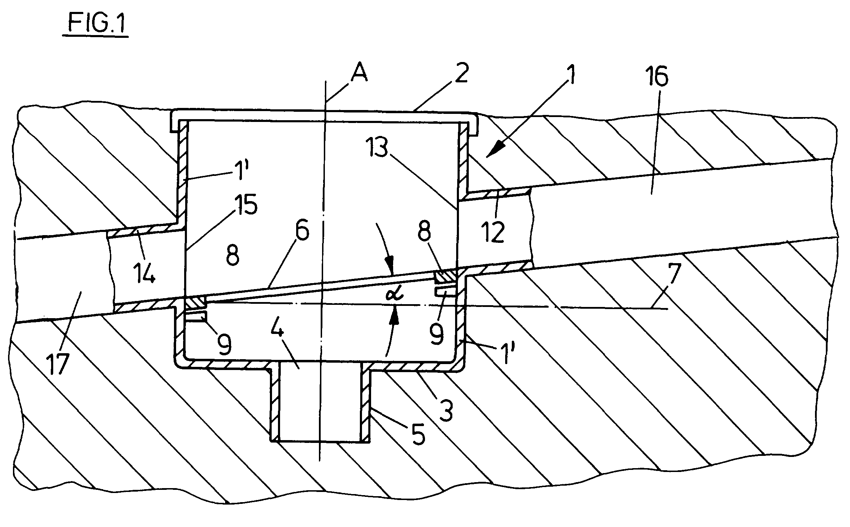

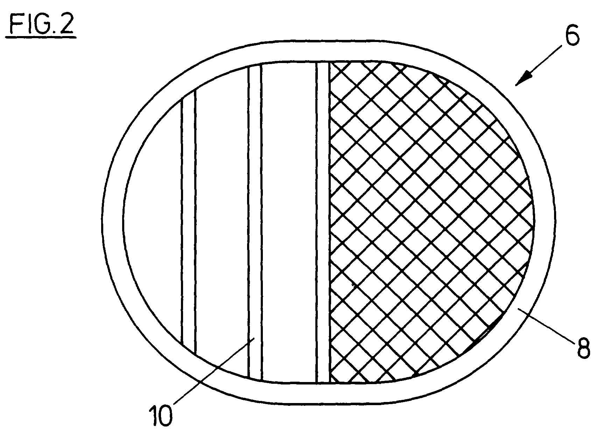

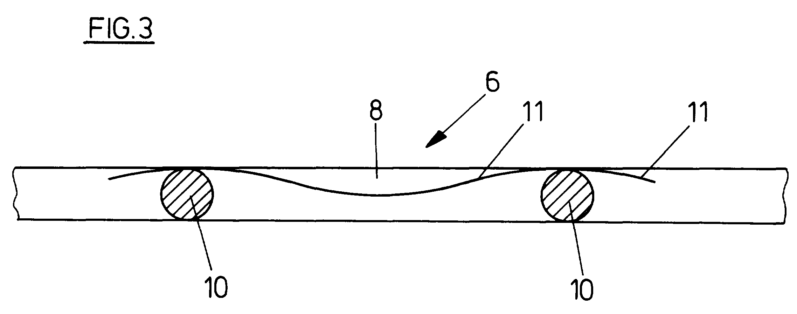

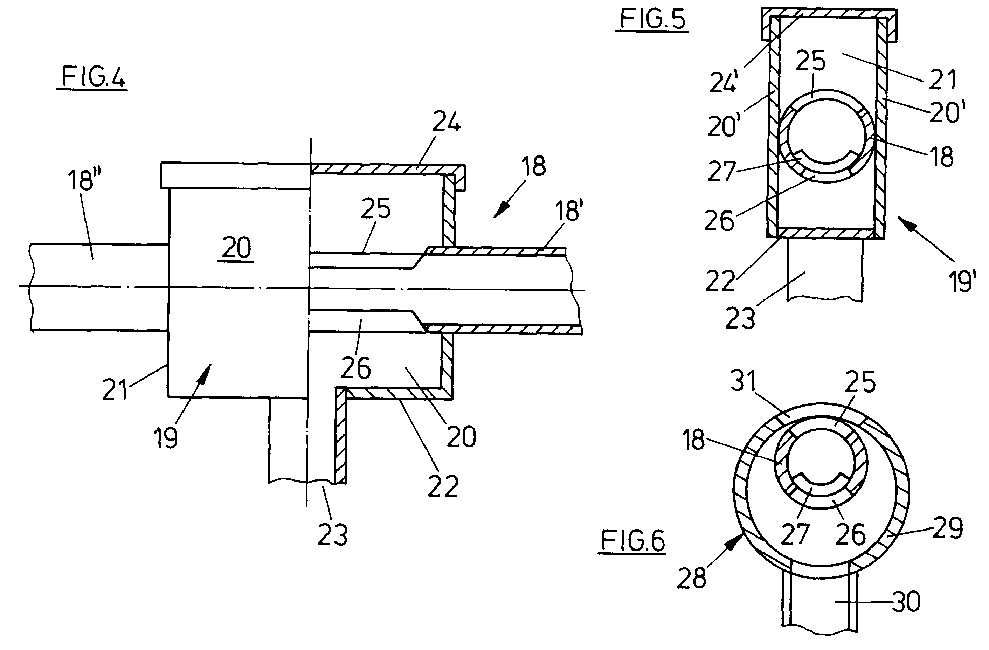

Die Figuren 4 und 5 zeigen als weitere Ausführungsformen zwei Regenwassersammler, die sich von dem Regenwassersammler der Figuren 1 - 3 im wesentlichen dadurch unterscheiden, daß der Regenwassereinlauf 18 und der Wasser und Schmutzaustrag des Sammlers von einem durchgehenden Rohr 18 gebildet ist, welches durch ein Gehäuse 19 (Fig. 4) bzw. 19' (Fig. 5) hindurchgeführt ist. Das Gehäuse 19, welches ebenso wie das beidendig über das Gehäuse 19 vorstehende und beidendig offene Rohr 18 aus Kunststoff gefertigt ist, besitzt eine kreiszylinderförmige Ausbildung mit einer die vertikale Gehäuseachse A konzentrisch umschließenden zylinderförmigen Umfangswand 20 und einem Boden 22. Bei der in der Fig. 5 dargestellten Ausführungsform besitzt das Gehäuse 19' eine quaderförmige Ausbildung mit zwei parallel zueinander und in Abstand voneinander sowie in Ebenen parallel zur Achse des Rohres 18 angeordneten Längswänden 20', die im eingebauten Zustand des Regenwassersammlers in vertikalen Ebenen liegen, mit zwei das Gehäuse stirnseitig abschließenden Stirnwänden 21, die in Ebenen senkrecht zur Achse des Rohes angeordnet sind und aus denen das Rohr 18 beidendig dicht herausgeführt ist sowie mit einer Bodenwandung 22, die den Innenraum des Gehäuses 19 unten dicht abschließt und mit einem Abfluß 23 zum Abführen des gesammelten Regenwassers versehen ist. Wie die Figuren 4 und 5 zeigen, stehen die Umfangswand 20 bzw. Seitenwände 20' und Stirnwände 21 sowohl nach oben als auch nach unten über die Außenfläche des Rohres 18 vor. Die Seitenwände 20' liegen an der Umfangsfläche des Rohres 18 an und sind dort mit dem Rohr in geeigneter Weise, beispielsweise durch Verschweißen oder Verkleben verbunden. Oben ist auf das von der Umfangswand 20 bzw. von den Seitenwänden 20', Stirnwänden 21 und der Bodenwand gebildete Gehäuse 19 ein abnehmbarer Deckel 24 bzw. 24' aufgesetzt. Die aus dem jeweiligen Gehäuse vorstehenden Enden 18' und 18'' bilden den Regenwassereinlauf bzw. den Wasser- und Schmutz- Austrag.

Im Innenraum des Gehäuses 19 bzw. 19' ist das Rohr 18 an dem oben liegenden Bereich seiner Mantelfläche und an dem unten liegenden Bereich seiner Mantelfläche jeweils mit einer Öffnung 25 bzw. 26 versehen. In der unteren Öffnung 26 liegt der dem Zwischenboden 6 entsprechende, allerdings waagerechte Zwischenboden 27 mit dem Sieb.

Die Figur 6 zeigt in einer Querschnittsdarstellung ähnlich Figur 5 eine weiter Ausführungsform des erfindungsgemäßen Regenwassersammlers. Dieser Sammler entspricht dem Sammler der Figuren 4 und 5 und besitzt wiederum das den Regenwasser-Zulauf und Ablauf bildende Rohr 18. Anstelle des quaderförmigen Gehäuses 19 ist aber ein zylinderförmiges Gehäuse 28 vorgesehen, dessen Umfangswand 29 von einem Hohlzylinder oder Rohrstück gebildet ist, und zwar mit einem Durchmesser größer als der Durchmesser des Rohres 18 und in dem das Rohr 18 derart angeordnet ist, daß es mit dem oberen Teil seiner Umfangsfläche gegen den oberen Bereich der Innenfläche der Umfangswand 29 anliegt und dort mit dem Gehäuse 29 verbunden ist. Das Rohr 18 besitzt wiederum oben die Öffnung 25, die dort deckungsgleich mit einer Öffnung 30 in Gehäuse 28 liegt. Weiterhin besitzt das Rohr 18 unten die Öffnung 26 mit dem siebartigen Zwischenboden 27.

Beide Öffnungen 25 und 26 befinden sich im Innenraum des Gehäuse 28. Dieser Innenraum ist stirnseitig durch jeweils eine Wandung verschlossen, durch die das Rohr 18 hindurchgeführt ist. Unterhalb des Rohres 18 ist im Gehäuse 28 wiederum ein Sammelraum gebildet, an dem der Abfluß 31 vorgesehen ist.

Eine Besonderheit der Regenwassersammler der Figuren 4 - 6 besteht auch darin, daß die Achse des Rohres 18 und damit die Achse des beispielsweise mit dem Ablauf einer Dachrinne verbundenen Zulaufes 18' und des beispielsweise an einem Kanal führenden Auslaufes 18'' jeweils senkrecht zur Querschnittsebene des Gehäuses 19 bzw. 28 liegen, der Regenwassersammler also in einem horizontal verlaufenden Teil des Kanales eingebaut werden kann. Auch bei der Ausführungsform der Figur 6 besteht das Rohr 18 und das Gehäuse 28 wiederum aus Kunststoff.

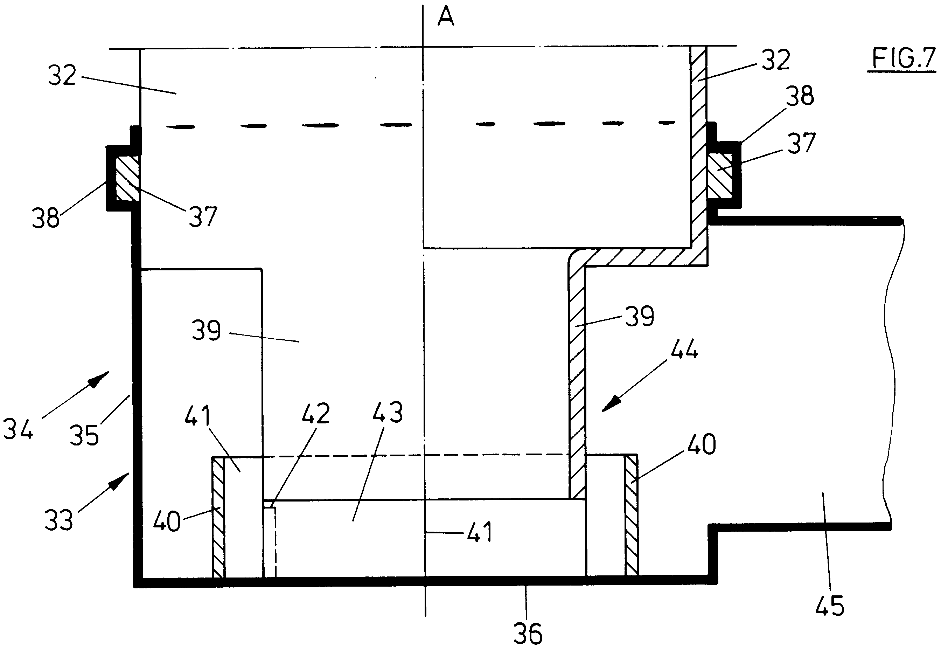

In der Fig. 7 ist das untere, kreiszylinderförmig ausgebildete Ende 32 eines Gehäuses einer Vorrichtung zum Filtern und Sammeln von Regenwasser dargestellt. Dieses Gehäuseteil 32 ist beispielsweise das untere Teil des Gehäuses 1 des Sammlers der Figuren 1 - 3 oder des Gehäuses 19 des Sammlers der Figur 4. An dem Gehäuseteil 32 bzw. auf die die vertikale Gehäuseachse konzentrisch umschließende kreiszylinderförmige Außenfläche des Gehäuses 32 ist an der Unterseite des Gehäuses ein napfförmiges Abschlußelement 33 des Geruchsverschlußes 34 aufgeschoben. Das napfförmige Abschlußelement 33 besitzt eine kreiszylinderförmige Umfangswand 35 und einen geschlossenen Boden 36. In das obere, offene Ende des Abschlußes 33 reicht das Gehäuseteil 32 hinein. Durch einen Dichtungsring 37, der in einer Aufnahme 38 an der Innenseite der Umfangswand 35 im Bereich des oberen, offenen Randes vorgesehen ist und der die vertikale Gehäuseachse A ebenfalls konzentrisch umschließt, ist ein dichter Abschluß für das Abschlußelement 33 an der Oberseite bzw. am Übergang zwischen diesem Abschlußelement und dem Gehäuseteil 32 erreicht. Das Gehäuseteil 32 besitzt an der Unterseite den nach unten wegstehenden Flansch 39 (Rohrstück), der von der Funktion und Ausbildung her dem Abfluß 5 bzw. dem Abfluß 23 oder 30 entspricht und über den das sich in dem unteren Gehäuseraum unterhalb des Zwischenbodens 6 bzw. 27 gesammelte Regenwasser abgeführt werden kann. Der Flansch 39, der von einem beidendig offenen Rohrstück gebildet ist, reicht mit seinem offenen Ende in einen Ring 40 hinein, der an der Innenseite des Bodens 36 mit einer Stirnseite derart verbunden ist, daß der Ring 40 achsgleich mit der Achse A angeordnet ist und das untere Ende des Flansches 39 mit einem Abstand konzentrisch umschließt. Der dem Boden 36 entfernt liegende obere Rand des Ringes 40 liegt auf einem Niveau höher als der untere Rand bzw. die untere Öffnung des Flansches 39. Bei der dargestellten Ausführungsform sind an der Innenfläche des Ringes 40 jeweils um 90° um die Achse A versetzt vier lamellenartige Wandabschnitte 41 vorgesehen, die mit ihrer Mittelebene radial zur Achse A angeordnet sind und an ihren innenliegenden Kanten Anlage- bzw. Abstützflächen für die Außenfläche des Flansches 39 bilden, wodurch der Abstand zwischen dem Ring 40 und der Außenfläche des Flansches 39 vorgegeben ist. Die Wandabschnitte 41 können durch entsprechende Abstufung an ihren radial innenliegenden Kanten auch so ausgebildet sein, daß sie im Bereich dieser Abstufung zugleich eine Anlagefläche für die Stirnseite des Flansches 39 am unteren, offenen Ende bilden und damit den Abstand zwischen dem unteren Ende des Flansches 39 und der Innenfläche des Bodens 36 definieren. Eine solche Abstufung ist in der Fig. 7 bei 42 mit unterbrochenen Linien dargestellt. Der mit dem Boden 36 verbundene Ring bildet im Innenraum des Abschlußelementes 33 eine an der Oberseite offene, ansonsten aber geschlossene Wanne 43, die zusammen mit dem in diese Wanne hineinreichenden Flansch oder Rohrstück 39 eine siphonartige Geruchs-sperre 44 bildet. An der Umfangswand 35 des Abschlusses 33 ist ein von einem Rohrstück gebildeter Anschluß 45 vorgesehen, der den eigentlichen Auslauf für das gesammtelte Regenwasser bildet und über eine nicht dargestellte Rohrleitung mit einem Regenwasser-Sammelbehälter oder einer Zisterne verbunden ist. Durch die siphonartige Geruchssperre 44 ist wirksam vermieden,daß mit Ab- oder Faulgasen belastete Luft aus einem Abwasserkanal, an dem der Regenwasser-Sammler angeschlossen ist (Auslaßflansch 40 der Fig. 1 bzw. Ende 18' der Fig. 4) über den Anschluß 45 in den Sammelbehälter bzw. in die Zisterne gelangt und dadurch das dort gesammelte Wasser verdirbt.

Ein weiterer Vorteil des Geruchs-Verschlusses 34 besteht darin, daß das Abschlußelement 33 durch die kreiszylinderförmige Ausbildung des Gehäuses am unteren Gehäuseteil 32 und durch die ebenfalls zylindrische Ausbildung der Umfangswand 35 des Abschlußelementes 33 sowie durch den achsgleich mit der Gehäuseachse A angeordneten Flansch 39 um die Gehäuseachse A geschwenkt werden kann, so daß der Anschluß bzw. Auslauf 45 den jeweiligen Einbauerfordernissen optimal orientiert werden kann.

Ein weiterer wesentlicher Vorteil besteht auch darin, daß der Auslauf 45 mit seiner Achse radial zur Achse A von der Umfangswand 35 wegführt, wodurch die Rohrleitung an den Auslauf horizontal angeschlossen werden kann und sich dadurch eine äußerst geringe Einbauhöhe ergibt.

Vorstehend wurde davon ausgegangen, daß es sich bei dem Gehäuseabschnitt 32 um das untere Ende des Gehäuses 1 oder 19 der in den Figuren 1 - 4 dargestellten Regenwasser-Sammler handelt. Es versteht sich, daß der Geruchs-Verschluß 34 selbstverständlich auch bei Regenwasser-Sammlern anderer Ausbildung verwendet sein kann, insbesondere dann, wenn das jeweilige Gehäuse an seinem unteren Ende den kreiszylinderförmigen Gehäuseabschnitt 32 bildet.

Die Erfindung wurde voranstehend an Ausführungsbeispielen beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Gehäuse
- 1': Umfangswand
- 2: Deckel
- 3: Gehäuseboden
- 4: Öffnung
- 5: Flansch
- 6: Zwischenboden
- 7: Bezugsebene
- 8: Zwischenbodenrahmen
- 9: Halter
- 10: Strebe
- 11: Sieb
- 12: Einlaßflansch
- 13: Öffnung
- 14: Auslaßflansch
- 15: Öffnung
- 16, 17: Rohr
- 18: Regenwassereinlauf
- 18', 18'': Ende
- 19, 19': Gehäuse
- 20: Umfangswand
- 20': Längswand
- 21: Stirnwand
- 22: Bodenwand
- 23: Abfluß
- 24, 24': Deckel
- 25, 26: Öffnung
- 27: Sieb
- 28: Gehäuse
- 29: Umfangswand
- 30: Öffnung
- 31: Abfluß
- 32: Gehäuse
- 33: Abschlußelement
- 34: Geruchs-Verschluß
- 35: Umfangswand
- 36: Boden
- 37: Dichtung
- 38: Aufnahme
- 39: Rohrstück oder Flansch
- 40: Ring
- 41: Wandabschnitt
- 42: Abstufung
- 43: Wanne
- 44: siphonartige Geruchssperre
- 45: Anschluß bzw. Auslauf

## Patentansprüche

1. Vorrichtung zum Sammeln von Regenwasser, mit einem für den Einbau im Untergrund bestimmten Gehäuse (1, 19, 28), dessen Innenraum durch einen zumindest teilweise als Sieb ausgebildeten Zwischenboden (6) in eine obere Kammer über den Zwischenboden und in eine untere Kammer unter den Zwischenboden unterteilt ist, mit wenigstens einem an einer Umfangswand (1') des Gehäuses in die obere Kammer mündenden Regenwasserzulauf (12, 18'), mit einem an der Umfangswand des Gehäuses (1) vorgesehenen Wasser- und Schmutzaustrag (14, 18''), sowie mit einem Ablauf (5, 23, 31) an der unteren Kammer zum Abführen des gesammelten Regenwassers, **dadurch gekennzeichnet**, daß sowohl der Regenwasserzulauf, als auch der Austrag (14) an der Umfangswand (1') auf einen Niveau oberhalb der unteren Kammer und des dortigen Abflusses (5) vorgesehen sind.

2. Vorrichtung nach Anspruch 1, dadurch gekennzeichnet, daß daß an der unteren Kammer oder am Ablauf (5, 23, 31) ein siphonartiger Geruchs-Abschluß (34) vorgesehen ist,
wobei vorzugsweise der Geruchsverschluß (34) von einem auf die Unterseite (32) des Gehäuses dicht aufgesetzten wannen- oder napfartigen Abschlußelement (33) gebildet ist, welches in seinem Inneren eine wannenartige Vertiefung (43) aufweist, in die der Ablauf (35, 23, 30) der unteren Kammer oder ein diesen Ablauf bildendes Rohrstück (39) zur Bildung einer siphonartigen Sperre (44) hineinreicht.

3. Vorrichtung nach einem der vorhergehenden Ansprüche, dadurch gekennzeichnet, daß an dem Geruchs-Verschluß (34) oder an dem Abschlußelement (33) des Geruchs-Verschlusses ein radial zur vertikalen Gehäuseachse (A) orientierter Auslauf (45) für das gesammelte Regenwasser vorgesehen ist,
und/oder
daß der Geruchsverschluß (34) bzw. das diesen Geruchsverschluß bildende Abschlußelement (33) um eine vertikale Achse, vorzugsweise um die vertikale Gehäuseachse (A) schwenkbar am Gehäuse (32) vorgesehen ist.

4. Vorrichtung nach einem der vorhergehenden Ansprüche, dadurch gekennzeichnet, daß der als Sieb ausgebildete Zwischenboden (6) zumindest in einem Teilbereich geneigt ist, wobei der geneigte Zwischenboden (6) vorzugsweise eine ovale Außenfläche besitzt.

5. Vorrichtung nach einem der vorhergehenden Ansprüche, dadurch gekennzeichnet, daß der als Sieb ausgebildete Zwischenboden zumindest in einem Teilbereich waagerecht ist.

6. Vorrichtung nach einem der vorhergehenden Ansprüche, dadurch gekennzeichnet, daß der Zwischenboden (6) den gesamten Querschnitt des Gehäuses (1) einnimmt und eine Verbindung zwischen der oberen und unteren Kammer ausschließlich über das Sieb (11) des Zwischenbodens besteht.

7. Vorrichtung nach einem der vorhergehenden Ansprüche, dadurch gekennzeichnet, daß der Zwischenboden (6) über den gesamten Querschnitt des Gehäuses (1) geneigt ist, vorzugsweise in einer einzigen, gegenüber der horizontalen geneigten Ebene liegt.

8. Vorrichtung nach einem der vorhergehenden Ansprüche, dadurch gekennzeichnet, daß sich der Einlauf (12, 18') und der Austrag (14, 18'') bezogen auf eine vertikale Achse (A) der Umfangswand (1') diametral gegenüberliegen,
und/oder
daß die Achsen des Zulaufs (12) und des Austrags (14) sowie die Normale des geneigten Zwischenbodens (6) mit der Achse des Gehäuses (1) in einer gemeinsamen Ebene liegen.

9. Vorrichtung nach einem der vorhergehenden Ansprüche, dadurch gekennzeichnet, daß die Ebene des Zwischenbodens (6) niveaugleich mit dem jeweiligen unteren Bereich des Zulaufes (12) und des Austrages (14) liegt.

10. Vorrichtung nach einem der vorhergehenden Ansprüche, dadurch gekennzeichnet, daß das Sieb (11) einen wellenförmigen Verlauf aufweist, bei dem die Wellentäler und Wellenkämme jeweils in einer Achsrichtung quer zur Verbindung zwischen dem Zulauf (12) und dem Austrag (14) liegen.

11. Vorrichtung nach einem der vorhergehenden Ansprüche, dadurch gekennzeichnet, daß der Zwischenboden (6) herausnehmbar und auf wenigstens einen Halter (9) aufliegend im Inneren des Gehäuses (1) angeordnet ist.

12. Vorrichtung nach einem der vorhergehenden Ansprüche, dadurch gekennzeichnet, daß das Gehäuse (1, 28) als Hohlzylinder ausgeführt ist;
wobei vorzugsweise die Zylinderachse des als Hohlzylinder ausgebildeten Gehäuses quer zur Achse des Regenwasserzulaufs und/oder des Wasser- und Schmutzaustrages liegt und/oder die Achse des als Hohlzylinder ausgebildeten Gehäuses (28) parallel zur Achse des Regenwasserzulaufs und/oder des Wasser- und Schmutzaustrages liegt.

13. Vorrichtung nach einem der vorhergehenden Ansprüche, dadurch gekennzeichnet, daß der Regenwasserzulauf und der Wasser- und Schmutzaustrag von einem Rohr oder Rohrstück (18) gebildet sind, welches durch das Gehäuse (19, 28) hindurchgeführt ist und beidendig aus dem Gehäuse vorsteht und mit diesen Enden den Regenwasserzulauf bzw. den Wasser- und Schmutzaustrag bildet, und daß das Rohr (18) im Inneren des Gehäuses (19, 28) wenigstens im untenliegenden Bereich zumindest eine Öffnung (26) aufweist, an welchem der als Sieb ausgebildete Zwischenboden (27) vorgesehen ist.

14. Vorrichtung zum Sammeln von Regenwasser, mit einem für den Einbau im Untergrund bestimmten Gehäuse (1, 19, 19', 28), dessen Innenraum durch einen zumindest teilweise als Sieb ausgebildeten Zwischenboden (6) in eine obere Kammer über den Zwischenboden und in eine untere Kammer unter den Zwischenboden unterteilt ist, mit wenigstens einem an einer Umfangswand (1', 20, 21) des Gehäuses in die obere Kammer mündenden Regenwasserzulauf (12, 18'), mit einem an der Umfangswand des Gehäuses (1) vorgesehenen Wasser- und Schmutzaustrag (14, 18''), sowie mit einem Ablauf (5, 23, 31) der unteren Kammer zum Abführen des gesammelten Regenwassers, **dadurch gekennzeichnet**, daß an der unteren Kammer oder am Ablauf (5, 23, 31) ein siphonartiger Geruchs-Abschluß (34) vorgesehen ist.
